# EUROPÄISCHE PATENTSCHRIFT

(11) **EP 2 943 425 B1**
(45) Veröffentlichungstag und Bekanntmachung des Hinweises auf die Patenterteilung: **10.05.2017**
(21) Anmeldenummer: 13796016.7
(22) Anmeldetag: 12.11.2013
(51) Int. Cl.: B65G 69/00

(54) **RAMMPUFFER**
IMPACT BUFFER
BUTOIR

(30) Priorität: 08.01.2013 DE 102013000075
(43) Veröffentlichungstag der Anmeldung: 18.11.2015
(73) Patentinhaber: Catac Capital GmbH, 5081 Anif (AT)
(72) Erfinder: MARSHALL, Michael, A-5081 Anif (AT)
(74) Vertreter: Rothkopf, Ferdinand
(86) Internationale Anmeldenummer: PCT/EP2013/073570
(87) Internationale Veröffentlichungsnummer: WO 2014/108229

(56) Entgegenhaltungen:
- EP-A1- 2 604 556
- DE-A1- 10 003 744
- US-A- 3 146 013
- US-A- 5 658 633

## Beschreibung

### Hintergrund der Erfindung

Die Erfindung betrifft einen Rammpuffer zum Anbringen an einer Verladerampe mit einem Halteteil zum Anbringen an der Verladerampe, einem Anschlagteil zum Anschlagen eines an der Verladerampe verladenden Fahrzeugs und einem Pufferteil zum Abpuffern einer Bewegung des Anschlagteils gegen das Halteteil.

Beim Beladen und Entladen von Lastkraftwagen an Verladerampen oder dergleichen muss der jeweilige Lastkraftwagen nahe an die Verladerampe heranfahren, ohne an dieser beschädigt zu werden. Es ist daher bekannt, an solchen Verladerampen Rammpuffer anzubringen, an die der Lastkraftwagen anstoßen kann. Die Rammpuffer müssen dabei den Anstoß des Lastkraftwagens so abpuffern, dass der Lastkraftwagen nicht beschädigt wird. Da an solchen Verladerampen die Anzahl an Verladevorgängen oft sehr, sehr hoch ist, unterliegen solche Rammpuffer einem vergleichsweise starken Verschleiß.

Aus US 5 658 633 A ist ein Rammpuffer mit zwei einseitig offenen Kästen bekannt, deren Inneres mit elastischem Material gefüllt ist. Zwei übereinander angeordnete Querstreben, die sich in Langlöchern über eine begrenzte Strecke bewegen können, verhindern ein Herabfallen des die Stoßbelastung aufnehmenden Anschlagteils des Rammpuffers von einem an der Verladerampe angebrachten Halteteil des Rammpuffers. Bei einer alternativen Gestaltung wird das Herabfallen mit seitlichen, vertikalen Lippen an den beiden Kästen verhindert.

Aus EP 1 182 155 A ist ein Rammpuffer zur Anbringung an Verladerampen, Überladebrücken und dergleichen bekannt, mit den folgenden Bestandteilen: einem ersten, im Querschnitt C-profilförmigen, vertikal erstreckten Teil aus hartem, stoßfesten Material, einem zweiten, im Querschnitt hutprofilförmigen, vertikal erstreckten Teil aus hartem, stoßfestem Material, dessen Seitenflansche im ersten Teil benachbart zu dessen Seitenflanschen angeordnet sind und dessen Stege sich aus dem ersten Teil heraus erstrecken, und einem innerhalb des ersten und zweiten Teiles angeordneten Kern aus elastisch verformbarem Dämpfungsmaterial, wobei entweder das erste oder das zweite Teil stationär anordbar und das andere die Stoßbelastung aufnehmende Teil relativ zum stationär anordbaren Teil in Stegrichtung beweglich ist, und wobei das andere die Stoßbelastung aufnehmende Teil relativ zum stationär anordbaren Teil auf- und abbeweglich angeordnet ist.

Aus US 3 146 013 A ist ein gattungsgemäßer Rammpuffer für die Rückseite eines LKW bekannt, der ein Halteteil, ein Anschlagteil sowie zwei dazwischen fixierte Federn umfasst. Das Anschlagteil ist U-förmig gestaltet und umschließt mit seiner Stirnseite sowie zwei Seitenteilen das Halteteil. Die beiden Seitenteile weisen gegenüberliegend je ein horizontales Langloch auf. Durch die beiden Langlöcher ist ein Zapfen geführt, der durch eine transversale Öffnung des Halteteils hindurchragt und damit das Halteteil mit dem Anschlagteil verbindet. Bei einer Stoßbelastung in Richtung Halteteil kann sich das Anschlagteil in seinen Langlöchern entlang des Zapfens verschieben.

Aus DE 100 03 744 A1 ist eine Puffereinrichtung für eine LKW-Ladestation bekannt, bei der sich eine Blattfeder mittels eines festen und eines losen Abstützpunktes an einer Trägerplatte abstützt. Zusätzlich ist zwischen der Trägerplatte und der Blattfeder ein Dämpfungselement angeordnet. Bei einer Stoßbelastung der Blattfeder in Richtung Trägerplatte verformt sich die zugleich als Anschlagteil dienende Blattfeder, indem sie sich in Richtung losem Abstützpunkt längt bzw. streckt. Dazu ist die Blattfeder im Bereich des festen Abstützpunktes mittels eines Lagerbolzens an der Trägerplatte um eine horizontale Querachse schwenkbeweglich gelagert.

Aus US 5 658 633 A ist ein Rammpuffer bekannt, der zwei ineinandergreifende, unelastische Halbschalen umfasst, innerhalb derer elastisches Material eingeschlossen ist. Äußere und innere Halbschale sind an ihren beiden gegenüberliegenden Seitenflächen mit einem Paar quer zwischen den Seitenflächen sich erstreckender, durchgehender Schrauben verbunden. Dazu ist die einzelne Schraube in zugehörigen Langlöchern der Seitenflächen der inneren Halbschale derart geführt, dass sich bei einer Stoßbelastung die äußere Halbschale in Richtung der inneren Halbschale verschieben kann.

Aus EP 2 604 556 A1 ist ein Rammpuffer bekannt, der prinzipiell einem senkrecht angeordneten Scherenhubtisch entspricht. Dazu umfasst der Rammpuffer ein Halteteil, ein bewegliches Anschlagteil und ein Dämpfungsmittel. Zudem ist an beiden Seiten des Halteteils jeweils eine Schere vorgesehen, die eine ausziehbare und zusammenziehbare Verbindung des Anschlagteils am Halteteil schafft. Jede Schere hat ein Scherenhebelpaar mit zueinander kreuzweise angeordneten Scherenhebeln. Jeder Scherenhebel ist seitlich oben am Halteteil bzw. Anschlagteil fixiert und an seinem gegenüberliegenden Ende seitlich unten am Anschlagteil bzw. Halteteil in je einer Führungsnut verschiebbar gelagert. Bei einer Stoßbelastung des Anschlagteils in Richtung des Halteteils verschieben sich die Scherenhebel in der Führungsnut nach unten.

### Zugrundeliegende Aufgabe

Der Erfindung liegt die Aufgabe zugrunde, einen Rammpuffer der eingangs genannten Art zu schaffen, der eine im Vergleich zu bekannten Rammpuffern höhere Lebensdauer aufweist.

### Erfindungsgemäße Lösung

Diese Aufgabe ist erfindungsgemäß mit einem Rammpuffer zum Anbringen an einer Verladerampe geschaffen, mit einem Halteteil zum Anbringen an der Verladerampe, einem Anschlagteil zum Anschlagen eines an der Verladerampe verladenden Fahrzeugs und einem Pufferteil zum Abpuffern des Anschlagteils gegen das Halteteil, bei dem das Anschlagteil an dem Halteteil mit mindestens einem Schwenkhebel abgestützt ist.

Bei dem erfindungsgemäßen Rammpuffer ist das Anschlagteil relativ zum Halteteil beweglich gestaltet. Zwischen dem Anschlagteil und dem Haltteil befindet sich das Pufferteil. Mit dem Halteteil sind auf diese Weise sowohl das Pufferteil als auch das Anschlagteil an der Verladerampe ortsfest bzw. stationär gehalten. Das Pufferteil kann bei einem Anstoß eines Fahrzeugs am Rammpuffer elastisch verformt werden und wandelt dabei kinetische Energie des Anschlags bzw. Aufpralls des Fahrzeugs in innere Reibungsenergie. Damit wird der Anstoß abgepuffert. Die Bewegung des Anschlagteils relativ zum Halteteil ist erfindungsgemäß mittels mindestens eines Schwenkhebels bzw. Schwenkteils über die Lebensdauer des Rammpuffers hinweg präzise geführt. Zugleich ist mit dem mindestens einen Schwenkhebel das Anschlagteil am Halteteil beweglich gehalten, und zwischen dem Halteteil und dem Anschlagteil auch das Pufferteil lagegenau gehalten.

Das Halteteil ist bevorzugt länglich und erfindungsgemäß mit zwei einander gegenüberliegenden Seitenflächen gestaltet. An beiden Seitenflächen des Halteteils sind erfindungsgemäß jeweils zwei sich parallel zueinander erstreckende Schwenkhebel zur Abstützung des Anschlagteils vorgesehen.

Das Halteteil und/oder das Anschlagteil ist bei einer vorteilhaften Weiterbildung ferner im Querschnitt mit einer U-Form gestaltet und der mindestens eine Schwenkhebel ist dabei innenseitig in der U-Form angeordnet. Vorzugsweise sind ferner das Halteteil und das Anschlagteil im Querschnitt mit einer U-Form gestaltet und die U-Form des Anschlagteils ist die U-Form des Halteteils übergreifend gestaltet.

Das Anschlagteil weist bevorzugt eine Deckelfläche bzw. Kopffläche auf, mit der es an dem Halteteil hängend abstützbar ist. Das Halteteil weist vorteilhaft eine Bodenfläche bzw. Fußfläche auf, mit der das Pufferteil an dem Halteteil abgestützt ist. Das Pufferteil ist bevorzugt quaderförmig gestaltet.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:
- Fig. 1: eine geschnittene Draufsicht eines ersten Ausführungsbeispiels eines erfindungsgemäßen Rammpuffers,
- Fig. 2: eine geschnittene Vorderansicht des Rammpuffers gemäß Fig. 1,
- Fig. 3: eine Seitenansicht des Rammpuffers gemäß Fig. 1,
- Fig. 4: eine geschnittene Draufsicht eines zweiten Ausführungsbeispiels eines erfindungsgemäßen Rammpuffers,
- Fig. 5: eine geschnittene Vorderansicht des Rammpuffers gemäß Fig. 4,
- Fig. 6: eine Seitenansicht des Rammpuffers gemäß Fig. 4,
- Fig. 7: eine geschnittene Draufsicht eines dritten Ausführungsbeispiels eines erfindungsgemäßen Rammpuffers,
- Fig. 8: eine geschnittene Vorderansicht des Rammpuffers gemäß Fig. 7,
- Fig. 9: eine Seitenansicht des Rammpuffers gemäß Fig. 7.

### Detaillierte Beschreibung des Ausführungsbeispiels

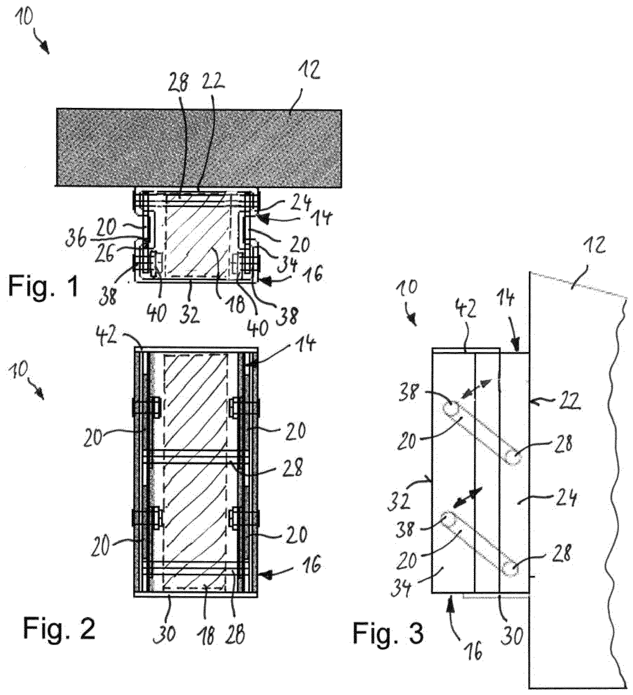

In den Fig. 1 bis 9 sind Rammpuffer 10 dargestellt, bei denen an einer zugehörigen Verladerampe 12 ein Halteteil 14 ortsfest angeschraubt ist. An dem Halteteil 14 ist ein Anschlagteil 16 beweglich gehalten, wobei sich zwischen dem Halteteil 14 und dem Anschlagteil 16 ein Pufferteil 18 befindet, welches elastisch verformt werden kann, wenn ein Fahrzeug bei einem Be- oder Entladevorgang an der Verladerampe 12 an dem Rammpuffer 10 anstößt. Das Anschlagteil 16 ist bei dieser Pufferbewegung mittels insgesamt vier Schwenkhebeln 20 an dem Halteteil 14 gehalten und geführt. Die Schwenkhebel 20 befinden sich als zwei Hebelpaare, deren Hebel parallel zueinander verlaufen, an je einer Seite des dabei schienenförmigen Halteteils 14 bzw. ebenfalls schienenförmigen Anschlagteils 16. Das aus elastischem Material, insbesondere aus Elastomer, hergestellte Pufferteil 18 liegt, als ein im Wesentlichen quaderförmiger Körper, geschützt im Inneren der Anordnung.

Dabei ist sowohl das Halteteil 14 als auch das Anschlagteil 16 im Querschnitt betrachtet (siehe Fig. 1, 4 und 7) jeweils im Wesentlichen U-förmig gestaltet.

Die U-Form des Halteteils 14 ist mit einer zur Verladerampe 12 gewandten Haltefläche 22 gebildet, von der seitlich als Schenkel jeweils eine Seitenfläche 24 absteht. Die Seitenflächen 24 des Ausführungsbeispiels gemäß Fig. 1 bis 3 sind jeweils S-förmig gestaltet und enden dabei mit einem nach außen gewandten Stegabschnitt 26. Die U-Form wird quer von zwei Bolzen 28 durchsetzt, an denen jeweils zwei der Schwenkhebel 20 an dem Halteteil 14 schwenkbar gelagert sind. Ferner weist das Halteteil 14 jeweils eine Bodenfläche 30 auf, auf der das Pufferteil 18 stehend abgestützt ist.

In ähnlicher Weise ist die U-Form des Anschlagteils 16 mit einer Anschlagfläche 32 gestaltet, die sich im Wesentlichen parallel zur Haltefläche 22 erstreckt und von der seitlich zwei Seitenflächen 34 abstehen. Die Seitenflächen 34 enden bei dem Ausführungsbeispiel gemäß Fig. 1 bis 3 mit je einem nach innen gewandten Stegabschnitt 36, der an dem zugehörigen Stegabschnitt 26 des Halteteils 14 hinterhakt ist.

Auch am Anschlagteil 16 befinden sich insgesamt vier Bolzen 38, die quer zur U-Form gerichtet und mittels je einer Bolzenstütze 40 am Anschlagteil 16 gehalten sind. Dabei ist jeweils zwischen einer Bolzenstütze 40 und einer Seitenfläche 34 des Anschlagteils 16 einer der Schwenkhebel 20 schräg nach oben in einem Winkel von ca. 45° gerichtet, schwenkbar an dem Anschlagteil 16 befestigt. Diese Konstruktion mit Bolzenstützen und zugehörigen kurzen, die U-Form nicht vollständig durchsetzenden Bolzen kann vorteilhaft auch als Alternative für die Bolzen 28 am Halteteil 14 gewählt werden. An dem Anschlagteil 16 befindet sich ferner eine Deckelfläche 42, mit der das Anschlagteil 16 hängend an dem Halteteil 14 abgestützt ist.

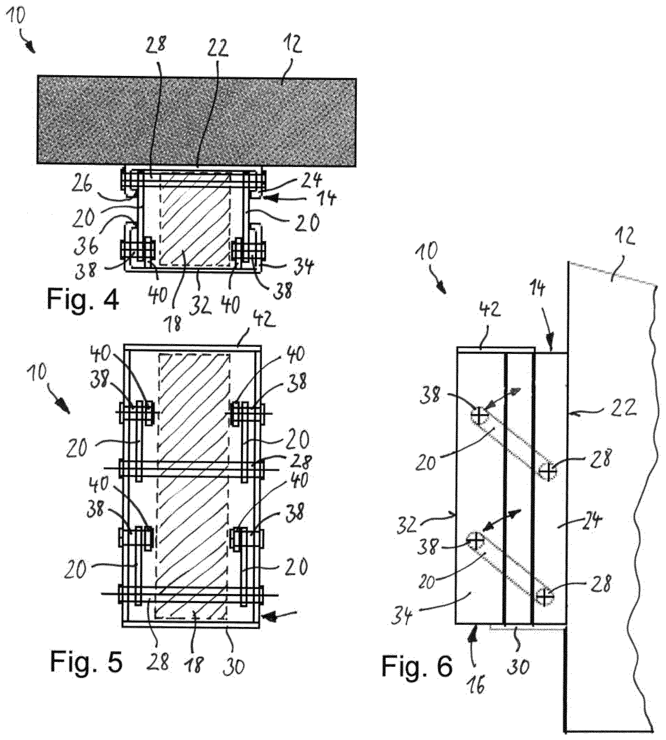

Bei dem Ausführungsbeispiel gemäß Fig. 4 bis 6 sind die Seitenflächen 24 des Halteteils 14 nicht S-förmig, sondern gerade mit nach innen gerichteten Stegabschnitten 26 gestaltet. Bei diesem Ausführungsbeispiel hinterhakt das Anschlagteil 16 nicht an dem Halteteil 14, ist aber dennoch mittels der Schwenkhebel 20 sowie auch der Deckelfläche 42 präzise an diesem gehalten und geführt.

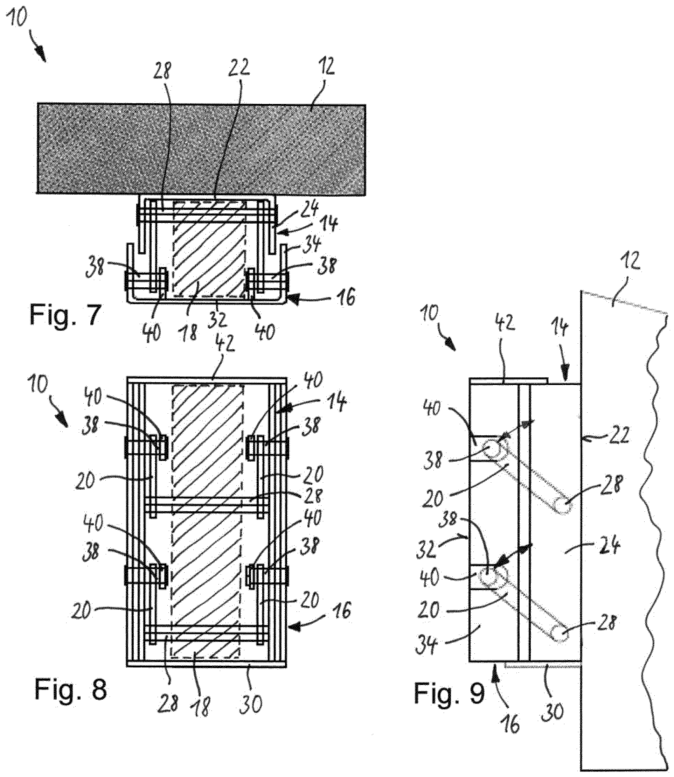

Das Ausführungsbeispiel gemäß Fig. 7 bis 9 ist mit Seitenflächen 24 und 34 gestaltet, die vollständig gerade (also ohne nach innen oder nach außen gerichtete Stegabschnitte) gestaltet sind. Dabei ist die U-Form des Anschlagteils 16 um derart viel größer als die U-Form das Halteteils 14 gewählt, dass das Anschlagteil 16 das Halteteil 14 übergreift.

### Bezugszeichenliste

- 10: Rammpuffer
- 12: Verladerampe
- 14: Halteteil
- 16: Anschlagteil
- 18: Pufferteil
- 20: Schwenkhebel
- 22: Haltefläche des Halteteils
- 24: Seitenfläche des Halteteils
- 26: Stegabschnitt der Seitenfläche des Halteteils
- 28: Bolzen am Halteteil
- 30: Bodenfläche am Halteteil
- 32: Anschlagfläche des Anschlagteils
- 34: Seitenfläche des Anschlagteil
- 36: Stegabschnitt der Seitenfläche des Anschlagteils
- 38: Bolzen am Anschlagteil
- 40: Bolzenstütze am Anschlagteil
- 42: Deckelfläche am Anschlagteil

## Patentansprüche

1. Rammpuffer (10) zum Anbringen an einer Verladerampe (12) mit einem Halteteil (14) zum Anbringen an der Verladerampe (12), einem Anschlagteil (16) zum Anschlagen eines an der Verladerampe (12) verladenden Fahrzeugs und einem Pufferteil (18) zum Abpuffern des Anschlagteils (16) gegen das Halteteil (14), bei dem das Anschlagteil (16) an dem Halteteil (14) mit mindestens einem Schwenkhebel (20) abgestützt ist und das Halteteil (14) mit zwei einander gegenüberliegenden Seitenflächen (24) gestaltet ist,
**dadurch gekennzeichnet, dass** an beiden Seitenflächen (24) des Halteteils (14) jeweils zwei sich parallel zueinander erstreckende Schwenkhebel (20) zur Abstützung des Anschlagteils vorgesehen sind.

2. Rammpuffer nach Anspruch 1,
bei dem das Halteteil (14) länglich gestaltet ist.

3. Rammpuffer nach Anspruch 1 oder 2,
bei dem das Halteteil (14) und/oder das Anschlagteil (16) im Querschnitt mit einer U-Form gestaltet ist und der mindestens eine Schwenkhebel (20) innenseitig in der U-Form angeordnet ist.

4. Rammpuffer nach einem der Ansprüche 1 bis 3,
bei dem das Halteteil (14) und das Anschlagteil (16) im Querschnitt mit einer U-Form gestaltet sind und die U-Form des Anschlagteils (16) die U-Form des Halteteils (14) übergreifend gestaltet ist.

5. Rammpuffer nach einem der Ansprüche 1 bis 4,
bei dem das Anschlagteil (16) eine Deckelfläche (42) aufweist, mit der es an dem Halteteil (14) hängend abstützbar ist.

6. Rammpuffer nach einem der Ansprüche 1 bis 5,
bei dem das Halteteil (14) eine Bodenfläche (30) aufweist, mit der das Pufferteil (18) an dem Halteteil (14) abgestützt ist.

7. Rammpuffer nach einem der Ansprüche 1 bis 6,
bei dem das Pufferteil (18) quaderförmig gestaltet ist.

## Claims

1. Impact buffer (10) for fitting to a loading ramp (12), comprising a retaining part (14) for fitting to the loading ramp (12), a stop part (16) for a vehicle to be loaded at the loading ramp (12) to strike, and a buffer part (18) for cushioning a movement by the stop part (16) against the retaining part (14), the stop part (16) being supported on the retaining part (14) with at least one pivot lever (20) and the retaining part (14) being embodied with two opposing lateral surfaces (24),
**characterised in that** two pivot levers (20) that extend parallel to one another for supporting the stop part are provided on each of the two lateral surfaces (24) of the retaining part (14).

2. Impact buffer according to claim 1,
wherein the retaining part (14) is embodied longitudinally.

3. Impact buffer according to claim 1 or 2,
wherein the retaining part (14) and/or the stop part (16) have a U-shaped cross-section and the at least one pivot lever (20) is arranged inside the U-shape.

4. Impact buffer according to one of claims 1 to 3,
wherein the retaining part (14) and the stop part (16) have a U-shaped cross-section and the U-shape of the stop part (16) overlaps the U-shape of the retaining part (14).

5. Impact buffer according to one of claims 1 to 4,
wherein the stop part (16) has a cover surface (42) with which the stop part (16) can be supported suspended on the retaining part (14).

6. Impact buffer according to one of claims 1 to 5,
wherein the retaining part (14) has a bottom surface (30) with which the buffer part (18) is supported on the retaining part (14).

7. Impact buffer according to one of claims 1 to 6,
wherein the buffer part (18) is cuboid-shaped.

## Revendications

1. Butoir (10) destiné à être amené contre une rampe de chargement (12) avec une partie de maintien (14) à amener contre la rampe de chargement (12), avec une partie de butée (16) pour faire buter un véhicule chargé contre la rampe de chargement (12) et avec une partie de tampon (18) pour tamponner la partie de butée (16) contre la partie de maintien (14), dans lequel la partie de butée (16) est maintenue contre la partie de maintien (14) avec au moins un levier pivotant (20) et que la partie de maintien (14) est réalisée avec deux surfaces latérales (24) opposées l'une par rapport à l'autre, **caractérisé en ce que** respectivement deux leviers pivotants (20) s'étendant parallèlement l'un par rapport à l'autre sont prévus au niveau des deux surfaces latérales (24) de la partie de maintien (14) pour maintenir la partie de butée.

2. Butoir selon la revendication 1, dans lequel la partie de maintien (14) est agencée de façon oblongue.

3. Butoir selon la revendication 1 ou 2, dans lequel la partie de maintien (14) et/ou la partie de butée (16) est réalisée avec une forme en U en section transversale et que l'au moins un levier pivotant (20) est disposé du côté intérieur dans la forme en U.

4. Butoir selon l'une quelconque des revendications 1 à 3, dans lequel la partie de maintien (14) et la partie de butée (16) sont agencées en section transversale avec une forme en U et que la forme en U de la partie de butée (16) est agencée de façon à engrener la forme en U de la partie de maintien (14).

5. Butoir selon l'une quelconque des revendications 1 à 4, dans lequel la partie de butée (16) comporte une surface de recouvrement (42) avec laquelle il peut être maintenu de façon accrochée au niveau de la partie de maintien (14).

6. Butoir selon l'une quelconque des revendications 1 à 5, dans lequel la partie de maintien (14) comporte une surface de fond (30) avec laquelle la partie de tampon (18) est maintenue contre la partie de maintien (14).

7. Butoir selon l'une quelconque des revendications 1 à 6, dans lequel la partie de tampon (18) est agencée en forme de parallélépipède rectangle.
